# EUROPÄISCHE PATENTSCHRIFT

(11) **EP 2 143 526 B1**
(45) Veröffentlichungstag und Bekanntmachung des Hinweises auf die Patenterteilung: **21.12.2011**
(21) Anmeldenummer: 09162580.6
(22) Anmeldetag: 12.06.2009
(51) Int. Cl.: B23Q 11/00, B25B 1/10

(54) **Spannvorrichtung mit Mitteln zur Spülung**
Mounting device with purging means
Dispositif de serrage doté de moyens de rinçage

(30) Priorität: 11.07.2008 CH 10862008
(43) Veröffentlichungstag der Anmeldung: 13.01.2010
(73) Patentinhaber: Mosig, Dieter, 6010 Kriens (CH)
(72) Erfinder: Mosig, Dieter, 6010 Kriens (CH)
(74) Vertreter: Schneider Feldmann AG Patent- und Markenanwälte

(56) Entgegenhaltungen:
- JP-A- 7 314 280
- US-A- 4 519 592
- US-A- 5 163 662

## Beschreibung

Die vorliegende Erfindung betrifft eine Spannvorrichtung mit Mitteln zur Spülung gemäss Patentanspruch 1.

Die Spannvorrichtung dient zum Einspannen von Werkstücken, hauptsächlich für die spanabhebende Bearbeitung, und die Mittel zur Spülung dienen dazu, die bei der Bearbeitung anfallenden Späne und Partikel wegzuspülen, damit diese nicht an der Spannvorrichtung hängenbleiben und so deren Funktion und Genauigkeit beeinträchtigen.

Die Verhinderung von Ablagerungen von Bearbeitungsrückständen wie Spänen, Abriebpartikeln und Staub an funktionskritischen Stellen von Spannvorrichtungen wie Spindeln, Lagern, beweglichen Hebeln und Backen ist ein in der Werkstückbearbeitung bekanntes Problem. Es kann auf verschiedenartige Weise gelöst werden.

Einer der Lösungsansätze besteht darin, zu verhindern, dass Bearbeitungsrückstände überhaupt an die funktionskritischen Stellen gelangen können. Dies kann beispielsweise mittels Abstreifern oder Deckelementen erfolgen. Letzteres ist beispielsweise in der WO-2006/133755-A1 dargelegt. Wegen der Beweglichkeit der Spannbacken lässt sich aber das Eindringen von Staub oder Kleinpartikeln nie ganz vermeiden.

Ein weiterer Lösungsansatz besteht darin, dafür zu sorgen, dass sich die Späne und Partikel gar nicht anlagern können. Dies kann beispielsweise durch fortlaufende oder zumindest zeitweise Spülung der kritischen Vorrichtungsteile mit einem Fluid, beispielsweise mit Luft oder mit einem Reinigungsfluid, erfolgen.

Die JP-07314280-A zeigt ein Ableitungssystem für Stahlspäne bei einer Werkzeugmaschine gemäß dem Oberbegriff von Anspruch 1. Dabei wird ein Werkstück in einer Spannvorrichtung gehalten. Bei der Werkstückbearbeitung anfallende langgestreckte Stahlspäne können via einen Hohlraum unter dem eingespannten Werkstück und einen Austragungskanal entfernt werden. Dazu wird eine unter Druck stehende Kühlflüssigkeit über eine Spülzuleitung und über Einspritzkanäle in den Hohlraum unter dem eingespannten Werkstück und in den Austragungskanal eingespritzt. Die Zuführung der Kühlflüssigkeit scheint allerdings wegen eines federungsgelagerten Kupplungsstückes auch nicht für hohe Fluiddrücke ausgelegt zu sein und die Einspritzkanäle sind lediglich parallel zur Spülzuleitung angelegt. Wegen der augenscheinlich spezifischen Aufgabenstellung dieser Vorrichtung (Entfernung langgestreckter Stahlspäne) sind die Fluid-Verteilkavitäten - hier also die Einspritzkanäle - auch nicht in einer speziellen Weise strahlrichtungsumlenkend angelegt oder ausgebildet. Die beweglich gelagerten Teile dieser Spannvorrichtung werden somit nicht gezielt gereinigt.

Aufgabe der Erfindung ist es, eine verbesserte Spannvorrichtung mit Mitteln zur Spülung anzugeben.

Diese Aufgabe wird durch die Merkmale des Patentanspruchs 1 gelöst.

Wesentliche Verbesserungen werden erreicht, indem die Spülzuleitung über eine Spindelaufsatzöffnung am Gehäusekörper erfolgt und eine mit der Spindelaufsatzöffnung verbundene und strahlrichtungsumlenkende Verteilkavität vorhanden ist.

Die erfindungsgemässe Spannvorrichtung ist vorzugsweise für den Einsatz in Werkzeugmaschinen mit innengekühlten Hauptspindeln vorgesehen. Bei Werkzeugmaschinen dieser Art wird die Kühlflüssigkeit vielfach auch zum Spülen des Maschinenraums verwendet. Somit kann bei Bedarf ein Werkzeughalter in die Hauptspindel eingewechselt werden, der über innere Kühlmittelzufuhr verfügt, um dann durch Einleitung der Kühl/Reinigungsflüssigkeit unter Druck in die Spülzuleitung den Reinigungsvorgang in der Spannvorrichtung auszulösen. Zu diesem Zweck ist der dazu vorgesehene Werkzeughalter vorzugsweise mit einem Kunststoff-Düsenkopf ausgerüstet, der druckdicht auf die Spindelaufsatzöffnung aufsetzbar ist. Selbstverständlich kann aber auch eine fixe Spülflüssigkeitszuleitung an der Spindelaufsatzöffnung angebracht sein.

Indem die mit der Spindelaufsatzöffnung verbundenen Verteilkavitäten strahlrichtungsumlenkende Ausformungen aufweisen, können Stellen die hinsichtlich des Verbleibens von Bearbeitungsrückständen besonders gefährdet sind, gezielt und wirksam gespült werden.

Die Erfindung eignet sich für Spannvorrichtungen mit Spannbacken, die relativ zueinander linear in einer Spannrichtung beweglich sind und bei denen die Spannbacken über Antriebsspindeln, über Keilschieber oder über andere Antriebselemente angetrieben werden. Die Erfindung eignet sich aber auch für Spannvorrichtungen bei denen nur eine Spannbacke beweglich ist und auch ganz allgemein für Spannvorrichtungen die generell eine Reinigung zur Sicherstellung der Funktion nötig haben. Bei spindelgetriebenen Spannvorrichtungen kann die Auslegung der Antriebsspindeln natürlich in verschiedener Weise erfolgen. Besonders einfache Bauweisen ergeben sich bei sogenannten Zentrumsspanneinrichtungen.

Je nach Bauweise der Spannvorrichtung kann die Spülzuleitung längs oder quer zur Spannrichtung erfolgen.

Zudem können je nach Bauweise der Spannvorrichtung im Inneren des Gehäusekörpers längs und/oder quer zur Spannrichtung verlaufende Abflusskavitäten vorhanden sein. Es hat sich gezeigt, dass das Vorhandensein mehrerer Abflusskavitäten die Zuverlässigkeit der Ausschwemmung verbessert und Verstopfungen eher vermieden werden können.

Die Spindelaufsatzöffnung ist vorzugsweise zum Aufsetzen einer Hohlspindel für eine Spülfluidzuleitung für ein unter Druck stehendes Spülfluid ausgebildet. Das Spülfluid ist dabei vorzugsweise mit einem Druck im Bereich von etwa 30 - 70 bar oder mehr zuleitbar. Tiefere oder höhere Drücke sind natürlich ebenfalls anwendbar. Derartige Hohlspindeln sind, wie oben erwähnt, bei Werkzeugmaschinen mit innengekühlten Werkzeugen und Werkzeugaufnahmen gebräuchlich und unter der Bezeichnung IKZ (Innen-Kühlschmierstoff-Zufuhr) bekannt. Mit den erwähnten relativ hohen Drücken gelingt es, die mit Bearbeitungsrrückständen verschmutzten Spannvorrichtungen in sehr kurzer Zeit und mit nur einigen wenigen Druckstössen zu reinigen.

Je nach Ausführungsform der Spannvorrichtung kann oder muss der eintretende Spülfluidstrahl anders gerichtet oder verteilt werden, um gezielt die mit heruntergefallenen Bearbeitungsrückständen verschmutzten Stellen zu erreichen und zu reinigen. Dies kann beispielsweise mittels geeigneter Umlenkausformungen in den Verteilkvitäten oder mittels Lenkkanälen erfolgen.

Um die Ausspülung der Bearbeitungsrückstände weiter zu erleichtern können zudem sich ausweitend ausgelegte Abflusskavitäten vorhanden sein.

Um die Bearbeitungsrückstände möglichst vollständig zu erfassen und die Mitnahme der Bearbeitungsrückstände möglichst zu begünstigen sind die Verteilkavitäten und die Abflusskavitäten auch so ausgelegt und gerichtet, dass eine Verwirbelung des Spülfluids an den kritischen Stellen erfolgt. Der im Anschluss an diese Verwirbelungsstellen wieder gerichtet fliessende Spülfluid-Strahl schwemmt dann die Bearbeitungsrückstände aus der Spannvorrichtung.

Im folgenden wird die Erfindung anhand von Zeichnungen von zwei Ausführungsbeispielen näher erläutert. Bei beiden Ausführungsformen handelt es sich um sogenannte Zentrumsspanneinrichtungen, also Einrichtungen, mit denen Werkstücke auf dem Arbeitstisch einer Werkzeugmaschine zentrisch eingespannt werden können. Dabei zeigen
- Fig. 1: eine einfache Zentrumsspanneinrichtung in einem seitlichen Schnitt mit den erfindungsgemässen Mitteln zum Spülen,
- Fig. 2: die Zentrumsspanneinrichtung von Fig. 1 im Grundriss,
- Fig. 3: eine Zentrumsspanneinrichtung mit Spannhebeln in einem seitlichen Schnitt mit den erfindungsgemässen Mitteln zum Spülen, und
- Fig. 4: die Zentrumsspanneinrichtung von Fig. 3 im Grundriss.

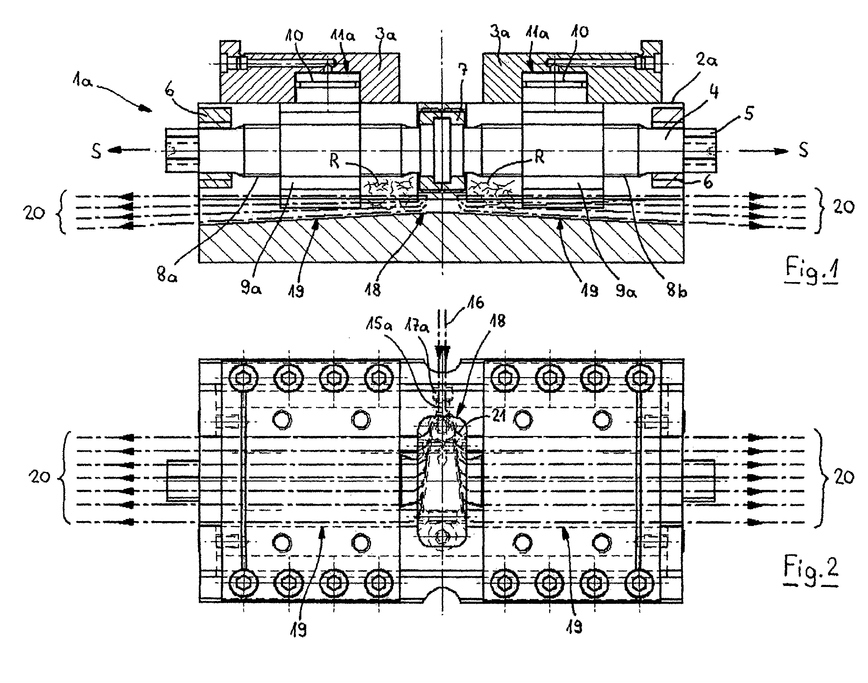

Die Fig. 1 zeigt eine einfache Zentrumsspanneinrichtung 1a in einem seitlichen Schnitt mit den erfindungsgemässen Mitteln zum Spülen. Die Zentrumsspanneinrichtung 1a hat einen Gehäusekörper 2a und wenigstens zwei auf dem Gehäusekörper 2a aufgesetzte Spannbacken 3a. Die Spannbacken 3a sind relativ zueinander in einer Spannrichtung S beweglich. Ein zu bearbeitendes Werkstück (nicht dargestellt) ist zwischen den Spannbacken 3a einspannbar.

Die Zentrumsspanneinrichtung 1a hat eine in Spannrichtung S angeordnete Antriebsspindel 4a, die ein- oder beidseitig mit einem Antriebszapfen 5 versehen ist. Durch Drehung der Antriebsspindel 4a über den Antriebszapfen 5 kann die Position der Spannbacken 3a relativ zueinander verstellt und das Werkstück zwischen den Spannbacken 3a eingespannt werden.

Die Antriebsspindel 4a ist beidseitig mit Radiallagerbuchsen 6 und in der Mitte mit einer doppelseitigen Achsiallagerbuchse 7 gelagert. Beidseitig und symmetrisch zum Zentrum der Zentrumsspannvorrichtung 1a sitzen auf gegenläufigen Gewinden 8a, 8b der Antriebsspindel 4a zwei Spindelmuttern 9a. Diese Spindelmuttern 9a sind in Spannrichtung S linear beweglich geführt, rotieren selber aber nicht. Jede Spindelmutter 9a weist ein Mitnahmeteil 10 auf, das in eine entsprechende Ausnehmung 11a der Spannbacke 3a eingreift und letztere so mitbewegt. Auf diese Weise erzielt man auch eine leichte Austauschbarkeit der Spannbacken 3.

Um auf die erfindungsgemässen Mittel zur Spülung eingehen zu können, wird zunächst noch auf die Figur 2 verwiesen. Diese zeigt die Zentrumsspanneinrichtung von Fig. 1 im Grundriss. Hier ist ersichtlich, dass eine Spülzuleitung 15a quer zur Spannrichtung S besteht. Eine Spülmittelzufuhr 16 erfolgt über eine Spindelaufsatzöffnung 17a. Die Spülzuleitung 15 mündet in eine Kavität, die im vorliegenden Fall die Achsiallagerbuchse 7 enthält und im unteren Teil als Verteilkavität 18 ausgebildet ist. Aus der Verteilkavität 18 erstrecken sich zu beiden Seiten in Spannrichtung verlaufende Abflusskavitäten 19. Über die Abflusskavitäten 19 erfolgt der Spülmittelauslauf 20. Zur Verdeutlichung sind in der Figur 1 noch Ablagerungen von Bearbeitungsrückständen R angedeutet.

Die Verteilkavität 18 weist eine Anzahl von Umlenkausformungen 21 auf, die dazu dienen, den mit Hochdruck einströmenden Spülfluidstrahl umzuleiten und zu verteilen. Im vorliegenden Fall sind diese Umlenkausformungen 21 zunehmend beabstandet als Formleitflächen angeordnet, um über die Breite des Spülmittelauslaufs 20 eine möglichst gleichmässige Verteilung des Spülmittelauslaufstroms zu erreichen. Dies ist mit einer Vielzahl von Pfeilen in Abflussrichtung dargestellt. Vorteilhafterweise sind zudem die Abflusskavitäten 19 strömungsabwärts sich ausweitend ausgelegt.

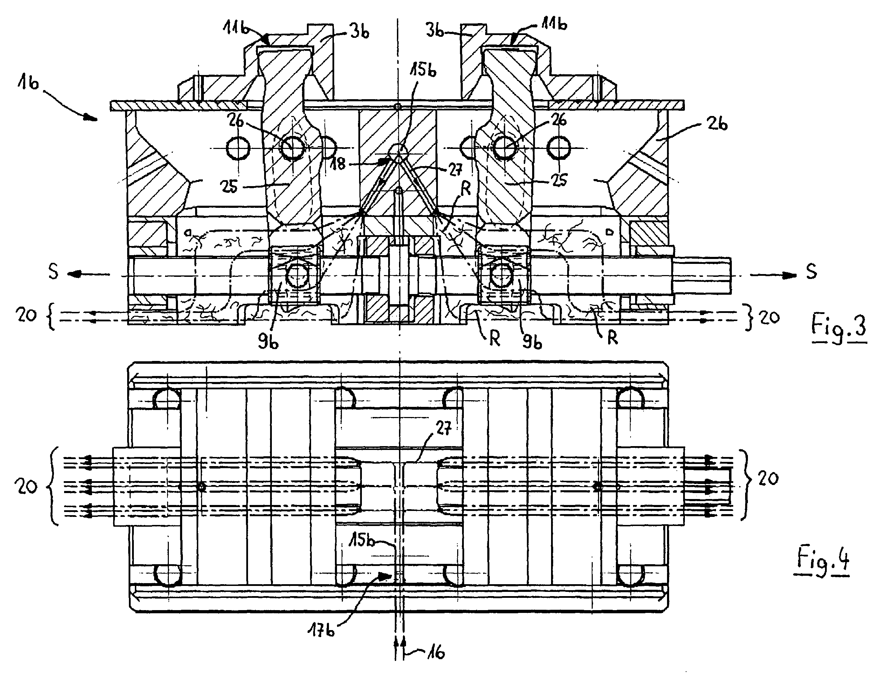

Die folgenden beiden Figuren 3 und 4 zeigen eine alternative Bauweise einer Zentrumsspanneinrichtung 1b. Da bezüglich prinzipiellem Aufbau vieles des bisher Gesagten bei dieser Ausführungsform ebenfalls zutrifft, wird im Folgenden nur auf einige wesentliche Unterschiede hingewiesen.

Die Figuren 3 und 4 zeigen eine Zentrumsspanneinrichtung 1b mit Spannhebeln 25 in einem seitlichen Schnitt mit den erfindungsgemässen Mitteln zum Spülen. Bei der Zentrumsspanneinrichtung 1b sind die Spannhebel 25 mittels Schwenkbolzen 26 am Gehäusekörper 2b schwenkbar gelagert. Untere Enden der Spannhebel 25 sind ihrerseits schwenkbar und gegenläufig von Spindelmuttern 9b auf der Antriebsspindel 4b schwenkbar geführt. Obere Enden der Spannhebel 25 ragen in Ausnehmungen 11b von Spannbacken 3b. Ein zwischen den Spannbacken 3b einspannbares Werkstück (nicht dargestellt) wird somit infolge der Kraftübertragung über die Spannhebel 25 sehr zuverlässig und fest eingespannt.

Hier ist ersichtlich, dass ebenfalls eine Spülzuleitung 15b quer zur Spannrichtung S besteht. Die Spülmittelzufuhr 16 erfolgt über eine Spindelaufsatzöffnung 17b. Lenkkanäle 27 zweigen von der Spülzuleitung 15b ab. Die Lenkkanäle 27 sind so gerichtet, dass die Antriebsspindel 4b und die Spindelmuttern 9b gezielt dem Spülmittelfluss ausgesetzt sind. Die Verteilkavität 18 wird in diesem Fall von Teilen der Spülzuleitung 15b und den Lenkkanälen 27 gebildet. In beiden Figuren sind zur Veranschaulichung mögliche Spülmittelflusswege strichpunktiert eingezeichnet. Der Spülmittelauslauf 20 erfolgt auch hier zu beiden Seiten in Spannrichtung S. Zusätzlich können, wie in der Figur 3 ersichtlich, auch noch weitere Spülmittelauslaufwege für den seitlichen Auslauf vorgesehen sein.

Zur näheren Erläuterung der Bauweise und Funktion einer Zentrumsspanneinrichtung gemäss den Fig. 3 und 4 wird zudem auf die EP-1 375 068 verwiesen.

### Bezugszeichenliste:

- 1a,b: Zentrumsspanneinrichtung
- 2a,b: Gehäusekörper
- 3a,b: Spannbacke
- 4a,b: Antriebsspindel
- 5: Antriebszapfen
- 6: Radiallagerbuchse
- 7: Achsiallagerbuchse
- 8a,b: Gewinde
- 9a,b: Spindelmutter
- 10: Mitnahmeteil
- 11a,b: Ausnehmung
- 12-14: nicht verwendet
- 15a,b: Spülzuleitung
- 16: Spülmittelzufuhr
- 17a,b: Spindelaufsatzöffnung
- 18: Verteilkavität
- 19: Abflusskavität
- 20: Spülmittelauslauf
- 21: Umlenkausformung
- 22-24: nicht verwendet
- 25: Spannhebel
- 26: Schwenkbolzen
- 27: Lenkkanäle

- S: Spannrichtung
- R: Bearbeitungsrückstände

## Patentansprüche

1. Spannvorrichtung mit Mitteln zur Spülung, wobei die Spannvorrichtung einen Gehäusekörper (2a,b) sowie wenigstens zwei auf dem Gehäusekörper (2a,b) aufgesetzte Spannbacken (3a,b) aufweist, die relativ zueinander in einer Spannrichtung (S) beweglich sind, und wobei als Mittel zur Spülung eine Spülzuleitung (15a,b) für ein Spülfluid vorhanden ist, die im Gehäusekörper (2a,b) zwischen den zwei Spannbacken (3a,b) mündet, **dadurch gekennzeichnet, dass**
die Spülzuleitung 15a,b über eine Spindelaufsatzöffnung 17a,b am Gehäusekörper 2a,b erfolgt und eine über die Spülzuleitung 15a,b mit der Spindelaufsatzöffnung 17a,b verbundene und strahlrichtungsumlenkende Verteilkavität 18 vorhanden ist.

2. Spannvorrichtung nach Patentanspruch 1, **dadurch gekennzeichnet, dass** die Spannbacken (3a,b) der Spannvorrichtung über mindestens eine Antriebsspindel (4a,b) angetrieben werden.

3. Spannvorrichtung nach Patentanspruch 1 oder 2, **dadurch gekennzeichnet, dass** die Spannvorrichtung eine Zentrumsspannvorrichtung (1a,b) ist.

4. Spannvorrichtung nach einem der Patentansprüche 1 bis 3, **dadurch gekennzeichnet, dass** die Spülzuleitung (15a,b) längs oder quer zur Spannrichtung (S) erfolgt.

5. Spannvorrichtung nach einem der Patentansprüche 1 bis 4, **dadurch gekennzeichnet, dass** im Innern des Gehäusekörpers (2a,b) längs und/oder quer zur Spannrichtung (S) verlaufende Abflusskavitäten (19) vorhanden sind.

6. Spannvorrichtung nach Patentanspruch 5, **dadurch gekennzeichnet, dass** im Innern des Gehäusekörpers (2a,b) mindestens zwei parallel zur Spannrichtung (S) verlaufende Abflusskavitäten (19) vorhanden sind.

7. Spannvorrichtung nach einem der Patentansprüche 1 bis 6, **dadurch gekennzeichnet, dass** die Spindelaufsatzöffnung (17a,b) zum Aufsetzen einer Hohlspindel für eine Spülfluidzuleitung unter Druck ausgebildet ist.

8. Spannvorrichtung nach Patentanspruch 7, **dadurch gekennzeichnet**, das der Druck 30 - 70 bar beträgt.

9. Spannvorrichtung nach einem der Patentansprüche 1 bis 8, **dadurch gekennzeichnet, dass** die strahlrichtungsumlenkende Verteilkavität (18) Umlenkausformungen (21) zur Verteilung und Umleitung eines Spülfluidstrahls aufweist.

10. Spannvorrichtung nach einem der Patentansprüche 1 bis 8, **dadurch gekennzeichnet, dass** die strahlrichtungsumlenkende Verteilkavität (18) Lenkkanäle (27) zur Verteilung und Umleitung eines Spülfluidstrahls aufweist.

11. Spannvorrichtung nach Patentanspruch 5 oder 6, **dadurch gekennzeichnet, dass** die Abflusskavitäten (19) strömungsabwärts sich ausweitend ausgelegt sind.

12. Spannvorrichtung nach einem der Patentansprüche 5 bis 11, **dadurch gekennzeichnet, dass** die Verteilkavität (18) und die Abflusskavitäten (19) eine Verwirbelung der Fluidströmung zwecks Mitnahme von Bearbeitungsrückständen begünstigen.

## Claims

1. A clamping device comprising means for purging, wherein the clamping device has a housing body (2a, b) and at least two clamping jaws (3a, b) which are attached onto the housing body (2a, 2b) and are movable relative to each other in a clamping direction (S), and wherein as a means for purging, there is a purge fluid supply line (15a, b) for a purge fluid which opens out in the housing body (2a, b) between the two clamping jaws (3a, b),
**characterized in that**
purge fluid supply 15a, b takes place through a spindle attachment opening 17a, b at the housing body 2a, b and that there is a distribution cavity 18 deflecting the beam direction and connected via the purge fluid supply line 15a, b to the spindle attachment opening 17a, b.

2. The clamping device according to patent claim 1, **characterized in that** the clamping jaws (3a, b) of the clamping device are driven via at least one drive spindle (4a, b).

3. The clamping spindle according to patent claim 1 or 2, **characterized in that** the clamping device is a centering clamping device (1a, b).

4. The clamping device according to any one of the patent claims 1 to 3, **characterized in that** purge fluid supply (15a, b) takes place in a direction longitudinal or transverse to the clamping direction (S).

5. The clamping device according to any one of the patent claims 1 to 4, **characterized in that** inside the housing body (2a, b), discharge cavities (19) are provided which extend longitudinal or transverse to the clamping direction (S).

6. The clamping device according to patent claim 5, **characterized in that** inside the housing body (2a, b) at least two discharge cavities (19) are provided which extend parallel to the clamping direction (S).

7. The clamping device according to any one of the patent claims 1 to 6, **characterized in that** the spindle attachment opening (17a, b) is formed for attaching a hollow spindle for purge fluid supply under pressure.

8. The clamping device according to patent claim 7, **characterized in that** the pressure is 30 - 70 bar.

9. The clamping device according to any one of the patent claims 1 to 8, **characterized in that** the beam direction-deflecting distribution cavity (18) comprises deflection formations (21) for distributing and deflecting a purge fluid beam.

10. The clamping device according to any one of the patent claims 1 to 8, **characterized in that** the beam direction-deflecting distribution cavity (18) comprises guide channels (27) for distributing and deflecting a purge fluid beam.

11. The clamping device according to patent claim 5 or 6, **characterized in that** the discharge cavities (19) are designed such that they expand downstream.

12. The clamping device according to any one of the patent claims 5 to 11, **characterized in that** the distribution cavity (18) and the discharge cavities (19) facilitate swirling the fluid flow for the purpose of entraining machining residues.

## Revendications

1. Dispositif de serrage comportant des moyens de lavage, dans lequel le dispositif de serrage présente un corps de logement (2a,b) ainsi qu'au moins deux mâchoires de serrage (3a,b) montées sur le corps de logement (2a,b), qui sont mobiles l'une relativement à l'autre dans une direction de serrage (S), et dans lequel comme moyen de lavage une conduite d'amenée de lavage (15a,b) destinée à un fluide de lavage est présente, qui débouche dans le corps de logement (2a,b) entre les deux mâchoires de serrage (3a,b), **caractérisé en ce que**
la conduite d'amenée de lavage (15a,b) parvient par l'intermédiaire d'une ouverture d'embout de broche (17a,b) sur le corps de logement (2a,b) et une cavité de distribution (18) déviant la direction de jet et reliée par l'intermédiaire de la conduite d'amenée de lavage (15a,b) à l'ouverture d'embout de broche (17a,b) est présente.

2. Dispositif de serrage selon la revendication 1, **caractérisé en ce que** les mâchoires de serrage (3a,b) du dispositif de serrage sont reliées par l'intermédiaire d'au moins une broche d'entraînement (4a,b).

3. Dispositif de serrage selon la revendication 1 ou 2, **caractérisé en ce que** le dispositif de serrage est un dispositif de serrage centreur (1a,b).

4. Dispositif de serrage selon une des revendications 1 à 3, **caractérisé en ce que** la conduite d'amenée de lavage (15a,b) s'étend longitudinalement ou transversalement à la direction de serrage (S).

5. Dispositif de serrage selon une des revendications 1 à 4, **caractérisé en ce que** des cavités de vidange (19) s'étendant longitudinalement et/ou transversalement à la direction de serrage (S) sont prévues à l'intérieur du corps de logement (2a,b) .

6. Dispositif de serrage selon la revendication 5, **caractérisé en ce que** à l'intérieur du corps de logement (2a,b) au moins deux cavités de vidange (19) s'étendant parallèlement à la direction de serrage (S) sont prévues.

7. Dispositif de serrage selon une des revendications 1 à 6, **caractérisé en ce que** l'ouverture d'embout de broche (17a,b) est réalisée afin de monter sous pression une broche creuse destinée à une conduite d'amenée de fluide de lavage.

8. Dispositif de serrage selon la revendication 7, **caractérisé en ce que** la pression est comprise entre 30 et 70 bar.

9. Dispositif de serrage selon une des revendications 1 à 8, **caractérisé en ce que** la cavité de distribution (18) déviant la direction de jet présente des déformations de déviation (21) pour distribuer et dévier un jet de fluide de lavage.

10. Dispositif de serrage selon une des revendications 1 à 8, **caractérisé en ce que** la cavité de distribution (18) déviant la direction de jet présente des canaux de direction (27) pour distribuer et dévier un jet de fluide de lavage.

11. Dispositif de serrage selon la revendication 5 ou 6, **caractérisé en ce que** les cavités de vidange (19) sont conçues de manière à s'évaser en aval de l'écoulement.

12. Dispositif de serrage selon une des revendications 5 à 11, **caractérisé en ce que** la cavité de distribution (18) et les cavités de vidange (19) favorisent le tourbillonnement de l'écoulement de fluide en vue de l'enlèvement des résidus d'usinage.
